# EUROPÄISCHE PATENTSCHRIFT

(11) **EP 1 481 300 B1**
(45) Veröffentlichungstag und Bekanntmachung des Hinweises auf die Patenterteilung: **16.11.2005**
(21) Anmeldenummer: 03714668.5
(22) Anmeldetag: 04.03.2003
(51) Int. Cl.: G05B 23/02, G05B 19/418

(54) **VORRICHTUNG UND VERFAHREN ZUM ÜBERWACHEN UND REGELN VON PROZESSLÖSUNG**
DEVICE AND METHOD FOR MONITORING AND REGULATING A PROCESS SOLUTION
DISPOSITIF ET PROCEDE DE SURVEILLANCE ET DE REGULATION D'UNE SOLUTION UTILISEE DANS UN PROCESSUS

(30) Priorität: 05.03.2002 DE 10209466
(43) Veröffentlichungstag der Anmeldung: 01.12.2004
(73) Patentinhaber: SITA Messtechnik GmbH, 01217 Dresden (DE)
(72) Erfinder: HABERLAND, Ralf, 03042 Cottbus (DE); SCHULZE, Lothar, 01139 Dresden (DE)
(74) Vertreter: Ilberg, Roland
(86) Internationale Anmeldenummer: PCT/DE2003/000679
(87) Internationale Veröffentlichungsnummer: WO 2003/075108

(56) Entgegenhaltungen:
- DE-A- 4 136 442
- DE-A- 10 029 505
- DE-A- 19 814 500
- DE-A- 19 836 720

## Beschreibung

### Technisches Gebiet

Die Erfindung betrifft eine Vorrichtung und ein Verfahren zum Überwachen und Regeln von Prozesslösung oder der Konzentration von Zusätzen in Prozesslösung, insbesondere Tensiden, auf der Grundlage einer Oberflächenspannungsmessung nach der Blasendruckmethode.

### Stand der Technik

Einführend angegebene Vorrichtung und Verfahren sind zur Bestimmung der Konzentration eines Waschmittels und zum Dosieren von Waschmitteln in Haushalt- Waschmaschinen aus der DE 100 29 505 A1 bekannt. Nach der Blasendruckmethode zur Messung der Oberflächenspannung einer Waschflüssigkeit wird in der Waschmaschine eine optimale Waschmitteldosiermenge intern ermittelt und eingestellt.

Unter einer Prozesslösung sollen hier insbesondere Reinigungs-, Beschichtungs- und Spüllösungen in industriellen Fertigungsprozessen verstanden werden, die in Bädern oder Spritz- bzw. Sprühanlagen eingesetzt werden. Dies ist beispielsweise in der metallverarbeitenden Industrie und in der Halbleiterfertigung der Fall.

Im Folgenden soll der Einfachheit halber stellvertretend für alle die Oberflächenspannung beeinflussenden Zusätze in Prozesslösungen auf Tenside und stellvertretend für alle Arbeitsprozesse auf industrielle Reinigungsbäder abgestellt werden, ohne damit den Anwendungsbereich der Erfindung irgendwie einschränken zu wollen.

Aufgabe von industriellen Reinigungs- und Spülbädern ist das zuverlässige Entfernen von Verschmutzungen bzw. Reinigerrückständen auf den Oberflächen von Behandlungsgut. Als Beispiel für ein Reinigungsgut sei ein gegen Korrosion geöltes Karosserieblech genannt, dessen Oberfläche anschließend zu behandeln ist. Dazu werden hauptsächlich Reiniger eingesetzt, deren Tenside z. B Fette emulgieren und dabei gebunden werden. Die prozessgerechte Konzentration der freien Tenside ist für das Reinigungs- und Spülergebnis qualitätsbestimmend. Bei zu geringer Tensidkonzentration ist die Reinigung unzureichend. Eine zu hohe Konzentration hat eine hohe Spülbadbelastung bzw. Reinigerrückstände zur Folge. Ebenso sind in den oftmals der Reinigung folgenden galvanischen und lackiertechnischen Prozessen die Konzentrationen von Tensiden und anderen Zusätzen, die die Oberflächenspannung einer Prozesslösung beeinflussen, zu überwachen und zu regeln.

Freie Tenside lagern sich an Grenzflächen an und senken dort die Oberflächenspannung. Die Messgröße Oberflächenspannung korreliert also mit der Konzentration freier Tenside in einer Prozesslösung und ist zur Überwachung festzulegender Grenzwerte für eine Tensidkonzentration geeignet.

Das konzentrations- und zeitabhängige Anlagerungsverhalten von Tensiden wird durch dynamische Messverfahren berücksichtigt. Durch eine Variation der Blasenlebensdauer und damit des Oberflächenalters der Blasen kann die Überwachung über einen weiten Konzentrationsbereich erfolgen. Ein gut zu automatisierendes Messverfahren ist die Blasendruckmethode.

Aus der DE 196 36 644 C1 ist eine Vorrichtung zur dynamischen Messung der Oberflächenspannung einer Lösung bekannt, die als mobiles Messgerät ausgeführt ist. In Anlehnung an die Methode des maximalen Blasendrucks wird eine Gasblase durch eine Messdüse in die zu untersuchende Flüssigkeit gedrückt und aus dem Druckverlauf eintauchtiefenunabhängig die Oberflächenspannung ermittelt. Die Vorrichtung hat eine Eingabetastatur für die Bedienung in verschiedenen Betriebsmodi, ein Anzeigedisplay zur Überwachung der Betriebsmodi und Anzeige der Messergebnisse, eine Volumenstromquelle zur Erzeugung des Gasdrucks, einen Drucksensor zur Erfassung des Druckverlaufs der Gasblasen, einen Mikroprozessor zur Steuerung und Verarbeitung der Messungen sowie eine interne Stromversorgung für sämtliche Stromverbraucher. Mit dem Messgerät lässt sich der Tensidgehalt einer Lösung sehr schnell mobil vor Ort bestimmen. Eine automatische Probenentnahme, eine Inline-Messung oder weiterführende automatisierte Eingriffe zur Veränderung der Qualität einer untersuchten Lösung oder in einem industriellen Prozessablauf sind mit der Vorrichtung nicht möglich.

Nach US 6 085 577 wird die Oberflächenspannung von in einem Kessel, Reaktor oder Rohrsystem unter Druck stehenden verflüssigten Gas mit einem Blasendrucktensiometer auch schon kontinuierlich gemessen, indem die Druckdifferenz zwischen den Druckmaxima unterschiedlicher Messkapillaren gemessen werden. Ein anderes Anwendungsgebiet ist die kontinuierliche Messung viskoser Flüssigkeiten und Flüssigkeiten mit hohem Feststoffgehalt sowohl unter Druck als auch in normaler Umgebung. Die Messkapillaren werden direkt im Kessel, im Reaktor oder im Rohrsystem montiert und die Drucksignale leitungsgebunden zu einem Messgerät geführt. Aufgrund der Strömung einer Flüssigkeit oder Erschütterungen in einem Kessel usw. sind aussagekräftige Mess-Signale nur schwer zu erhalten, denn der maximale Blasendruck an der Spitze einer Messkapillare beträgt nur wenige Millibar. Eine aktive Prozessbeeinflussung ist nicht vorgesehen.

Aus der DE 41 36 442 A1 ist ein Verfahren und eine Vorrichtung zum Entfetten und Reinigen metallischer Oberflächen bekannt, wonach die dynamische Oberflächenspannung einer Probe als Maß für eine aktuelle Reinigungsreserve mit einem Blasendrucktensiometer gemessen wird. Zwei in die Probe mit gleicher Tiefe eintauchende Messkapillaren mit unterschiedlichem Radius sind nach der Methode der Differenz der maximalen Blasendrücke an eine konstante Gasstromquelle angeschlossen. Die Messwerte werden mit einem durch Kalibrierung auf das verwendete Reinigungsmittel ermittelten Sollwert verglichen. In Abhängigkeit vom Vergleichsergebnis werden Badzustände ausgegeben und notwendige Pflegearbeiten wie Nachdosierung und Aufarbeitung erkannt. Wie diese ausgeführt werden sollen, ist nicht offenbart.

Aus der DE 198 14 500 A1 ist eine Kontrolle und Steuerung des Tensidgehalts in wässrigen Prozesslösungen bekannt. Der Tensidgehalt wird durch selektive Adsorption, elektrochemische, chromatographische, durch Spaltung in flüchtige Verbindungen, Ausstrippen dieser flüchtigen Verbindungen oder durch Zugabe eines Reagenzes ermittelt, das die Wechselwirkung der Probe mit elektromagnetischer Strahlung proportional zum Tensidgehalt ändert. Blasendrucktensiometrie wird nicht ausgeübt.

In der DE 198 36 720 A1 ist eine Kontrolle und Steuerung von Reinigungsbädern beschrieben, nach der mindestens die Bestimmung des Tensidgehaltes und die Bestimmung der Belastung mit anorganisch und/oder organisch gebundenen Kohlenstoff oder der Alkalität programmgesteuert ausgeführt wird. Je nach Ergebnis erfolgt eine Nachdosierung von Ergänzungskomponenten und/oder eine oder mehrere Badpflegemaßnahmen. Die Bestimmung des Gehalts an Tensiden erfolgt dabei nach dem in DE 198 14 500 A1 angegebenen Verfahren.

Nach DE 34 24 711 A1 ist es außerdem bekannt, eine Reinigungsanlage unter Berücksichtigung der elektrischen Leitfähigkeit des verwendeten Reinigungsmittels zu steuern. Dabei wird ausgenutzt, dass sich die Leitfähigkeit eines Reinigungsmittels mit dem Verschmutzungsgrad ändert. Mit zunehmender Reinigung vermindert sich die Differenz der Leitfähigkeit von Badvorlauf zu Badrücklauf. Aus der Leitfähigkeit allein kann aber aufgrund vielfältigster Verunreinigungen an einem Reinigungsgut und damit einer undefinierten Badbelastung mit Verschmutzungen nicht zuverlässig genug auf das Reinigungsergebnis, aber auch nicht sicher auf den Zustand der Prozesslösung geschlossen werden.

DE 43 00 514 beschreibt ein Verfahren zur Bestimmung der freien Tenside in wässrigen Öl-/ Wasser Emulsionen, bei dem die Oberflächenspannung eines benutzten mit der eines frisch angesetzten verglichen wird, bei dem die Oberflächenspannung in eine Korrelation zum Schäumverhalten gesetzt wird. Eine automatisierte Vorrichtung zur Durchführung des Verfahrens wird nicht angegeben.

Auch nach der einführend angegebenen DE 100 29 505 A1 ist eine kontinuierliche Überwachung und Pflege einer auf Qualität nachzuregelnden Waschflüssigkeit nicht vorgesehen. Ebenso findet keine Kommunikation mit einem externen Prozessleitsystem statt. Die Steuerung ist in die Waschmaschine integriert und nicht in einem separat aufgebauten und autark arbeitenden Gerät untergebracht.

### Darstellung der Erfindung

Der Erfindung liegt die Aufgabe zugrunde, eine Vorrichtung und ein Verfahren zur fortlaufenden automatischen Kontrolle und Pflege einer industriellen Prozesslösung für kontinuierlich arbeitende Bäder, Sprühreinigungsanlagen, Beschichtungsanlagen und dergleichen anzugeben, die auf einen mit der Oberflächenspannung korrelierenden Wert als Maß für eine aktuelle Qualität einer Prozeßlösung fußt, insbesondere der Konzentration an anionischen, kationischen, nichtionischen bzw. amphoteren Tensiden. Ziel ist die Schaffung eines intelligenten Systems, welches optimale Verfahrenssicherheit anstrebt. Die Vorrichtung soll vorzugsweise ortsnah am industriellen Prozessbad angeordnet werden, um aufwendige Installationen von elektrischen Leitungen, Fluidleitungen sowie Armaturen zu vermeiden, um dem Bedienungspersonal des Prozessbades eine einfache Kontrolle funktioneller Parameter der Vorrichtung und/oder des Prozessbades zu ermöglichen und um zu erreichen, dass die Probeneigenschaften keine Veränderung wie Ablagerung oder Temperaturveränderung erfahren. Um einen höchstmöglichen Automatisierungsgrad zu ermöglichen, soll die Vorrichtung autark arbeiten und beispielsweise selbstständig die Medienzuführung und Medienabführung regulieren. Mit einer Vorrichtung sollen auf Wunsch auch mehrere Prozesslösungen alternierend überwacht und beeinflusst werden können.

Diese Aufgabe wird erfindungsgemäß gelöst durch eine Vorrichtung nach den Merkmalen des selbständigen Anspruchs 1 und durch ein Verfahren nach dem selbständigen Anspruch 14. Vorteilhafte Weiterbildungen sind in den abhängigen Ansprüchen angegeben.

Ein wesentlicher Vorteil der erfindungsgemäßen Vorrichtung ist darin begründet, dass sämtliche Komponenten zur Überwachung und Steuerung einer industriellen Prozesslösung in einer autarken baulichen und funktionellen Einheit zusammengefasst sind. Hierdurch werden dem Betreiber umfängliche Planungs- und Installationsarbeiten erspart. Badspezifische Werte und Kennlinien werden zuvor im Labor erarbeitet und im Speicher der Vorrichtung abgelegt. Auf diese greift ein in die Vorrichtung integrierter Controller bei der erfindungsgemäßen Bestimmung des Tensidgehaltes, der Signalisierung von Zuständen oder der Einleitung von prozesstechnischen Maßnahmen zu. Die Erfindung umfasst ein komplexes Rechensystem, welches mit einem externen Prozessleitsystem kommuniziert, aus übertragenen, eingegebenen, gemessenen und korrigierten Werten oder Prozessmodellen lernt und selbständige Entscheidungen hinsichtlich der Prozessbeeinflussung treffen kann. Durch eine automatische Kontrolle und Regelung erfolgt eine personelle Entlastung und es wird maximale Verfahrenssicherheit erreicht. Der Zu- und Ablauf von Proben, die Kalibrierung des Oberflächenspannungssensors und die Reinigung seiner Messkapillare sowie die Messung erfolgen vollautomatisch. Es werden in der Regel keine stichprobenhaften Kontrollen der Konzentration einer Prozesslösung vorgenommen, sondern es erfolgt eine fortlaufende Überwachung von Reinigungs-, Spül- oder Beschichtungsprozessen. Vollautomatisch können bei Bedarf Pflegemaßnahmen an der Prozesslösung vorgenommen werden. Hierzu werden über das externe Prozessleitsystem und gegebenenfalls über eine weitere Schnittstelle ein externes Dosiersystem angesteuert. Die prozessrelevanten Messgrößen werden überwacht, verarbeitet und gespeichert. Die Automatisierung führt bei geringerem Einsatz von z.B. Wasser und Reiniger zu besseren Reinigungsergebnissen, da z.B. ein Zudosieren nicht mehr empirisch vorgenommen werden muss, und zu einer Erhöhung der Prozess-Zuverlässigkeit. Mit einer Vorrichtung können alternierend auch mehrere Prozesslösungen überwacht und beeinflusst werden. Weitere Schnittstellen an der Vorrichtung dienen der Signalisierung von Zuständen eines oder mehrerer Verfahrensablaufes und der Vorrichtung selbst zum Zwecke der Kontrolle funktioneller Parameter.

### Kurze Beschreibung der Zeichnungen

Die Erfindung soll anhand eines Ausführungsbeispiels näher erläutert werden. In der zugehörigen Zeichnung zeigt:
- Fig. 1: eine stark schematisierte Ansicht einer Vorrichtung bei geöffnetem Gehäusedeckel,
- Fig. 2: ein besonders vorteilhaftes Messgefäß,
- Fig. 3: eine besonders vorteilhafte Messkapillare,
- Fig. 4: beispielhaft eine von vielen im Datenspeicher der Vorrichtung abgelegte Kennlinie,
- Fig. 5: einen prinzipiellen Flusslaufplan zur Arbeitsweise der Vorrichtung und
- Fig. 6: einen prinzipiellen Plan zum Anschluss an ein Bad.

### Bevorzugte Wege zur Ausführung der Erfindung

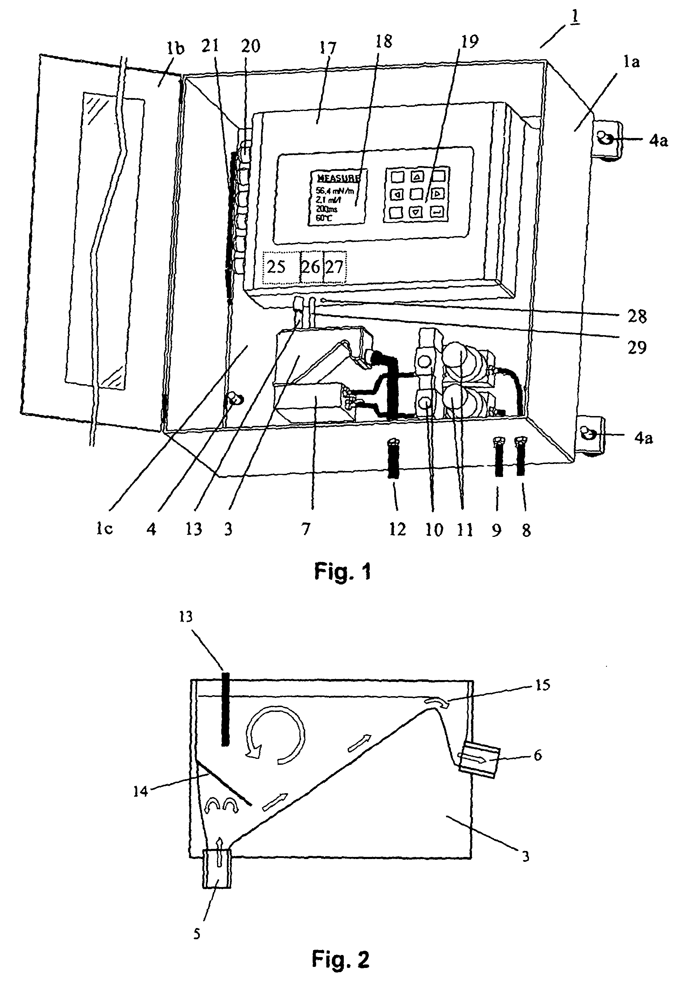

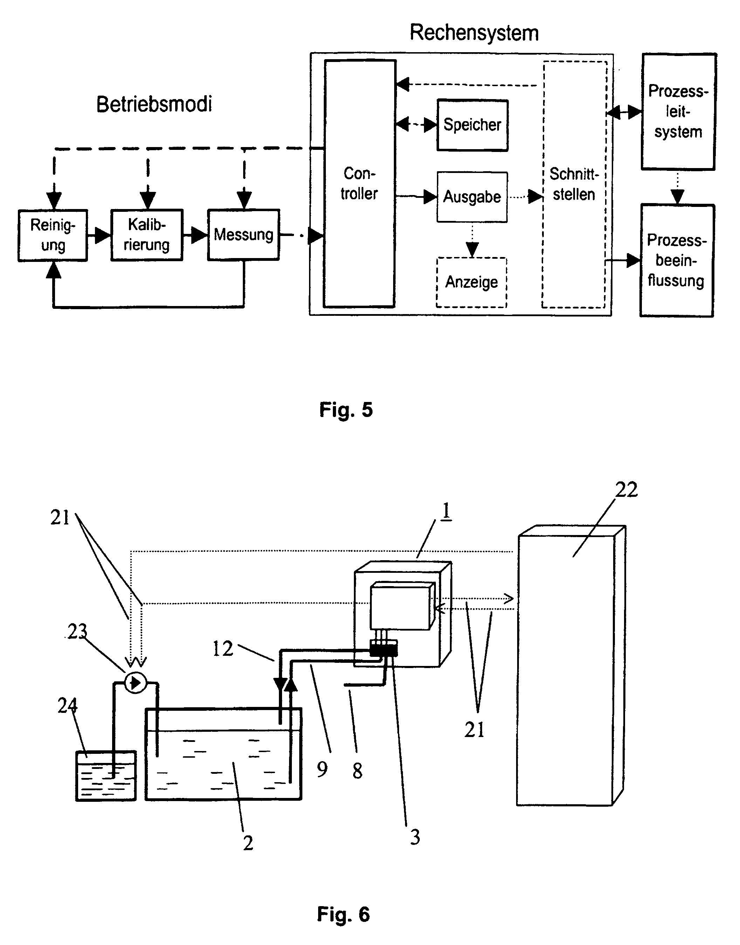

Gemäß Fig. 1 ist die Vorrichtung als komplexe Einheit in ein robustes, stoßgesichertes Gehäuse 1a mit einer Tür 1b eingebaut, das z.B. an eine Wand nahe einem Reinigungsbad 2 (s. Fig. 6) für z.B. Karosserieteile ohne umfängliche Aufwendungen für die Planung und Installation montiert ist.

Im unteren Teil des Gehäuses 1a ist ein Messgefäß 3 angeordnet. Eine Montageplatte 1c, die das Messgefäß 3 trägt, ist mittels Dämpfungsmaterial 4 schwingungsgedämpft gelagert, um Erschütterungen aus der Umwelt nicht auf eine Kalibrierflüssigkeit und eine zu messende Probe zu übertragen. Zusätzlich kann das Gehäuse 1a auf Dämpfungsmaterial 4a montiert werden. Das Messgefäß 3 hat einen Zulauf 5 und einen Ablauf 6. Der Zulauf 5 wird über einen Verteiler 7 bedient. Der Verteiler 7 sorgt im Zusammenspiel mit Ventilen 10 dafür, dass programmgerecht entweder Spülflüssigkeit, Kalibrierflüssigkeit oder Probe zuläuft. Im Beispiel wird als Spül- und Kalibrierflüssigkeit aus einem vorhandenen Leitungsnetz über einen Zulaufanschluss 8 Frischwasser zugeführt. Probe fließt dem Messgefäß 3 über einen Zulaufanschluss 9 entweder aufgrund des Schweredrucks aus dem Bad 2 zu, was voraussetzt, dass der Badspiegel höher liegt als der Flüssigkeitsspiegel im Messgefäß 3, oder sie wird mit einer Fördereinrichtung, die z.B. an Stelle eines der Ventile 10 installiert sein kann, angesaugt. Im Beispiel stehen Wasser und Probe unter Druck an. Der Einlass wird deshalb für beide Medien mit je einem Ventil 10 gesteuert und erforderlichenfalls mit einem Druckregler 11 auf einen jeweils gewünschten Einlassdruck geregelt. Vom Ablauf 6 führt im Beispiel ein Ablaufschlauch 12 in das Bad 2 zurück. Vorausgesetzt, der Flüssigkeitsspiegel im Messgefäß 3 liegt höher als der Badspiegel, fließen Wasser sowie Probe durch Schweredruck in das Bad 2 ab. Probe wird folglich im Beispiel im Bypass durch das Messgefäß 3 geführt.

Nach einer besonders bevorzugten Variante durchströmen Wasser und Probe das abgedeckte Messgefäß 3 im jeweiligen Modus permanent. Das Durchströmen hat den Vorteil, dass das Messgefäß 3 vom Frischwasser ohne weitere Vorkehrungen gut gespült werden kann und dass immer aktuelle, gut durchmischte Probe bereitsteht, ohne dass eine aufwendige Zu- und Ablaufsteuerung vom Bad 2 und zurück vorgesehen werden muss. Die Abdeckung des Messgefäßes 3 verhindert ein übermäßiges Ausdampfen der Probe. Um das Messgefäß 3 selbständig zu leeren, kann ein Bypass geringen Querschnittes vom Zulauf 5 des Messgefäßes 3 in den Ablauf 6 münden. Die Oberflächenspannungsmessung nach der Blasendruckmethode verlangt eine möglichst ruhige, erschütterungsfreie Probe. Hierzu trägt neben der schwingungsgedämpften Lagerung des Gehäuses 1a und der Montageplatte 1c bei, dass im Bereich der in die Flüssigkeit eintauchenden Messkapillare 13 die Probe strömungsberuhigt ist.

Aus Fig. 2 sind hierzu nähere Einzelheiten zu erkennen. Der Zulauf 5 zum trichterartig ausgeformten Messgefäß 3 befindet sich an der untersten Stelle. Die zulaufende Flüssigkeit, Wasser oder Probe, prallt an einer Prallplatte 14 ab und füllt das Messgefäß 3 bis in Höhe eines Überlaufs 15. Unterhalb des Überlaufs 15 befindet sich der Ablauf 6. Die Messkapillare 13 ist im Strömungsschatten der Prallplatte 14 und somit im strömungsberuhigten Bereich angeordnet. Zum leichteren Wechsel der Messkapillare 13 oder zur Inspektion ist das Messgefäß 3 verschiebbar angeordnet.

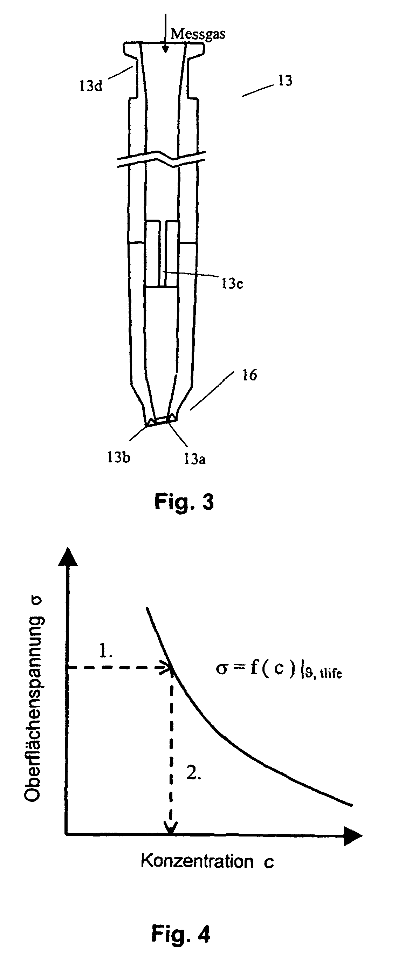

Eine besonders zu bevorzugende Ausgestaltung einer Messkapillare 13 wird anhand der Fig. 3 beschrieben. Die Messkapillare 13 ist aus einem hydrophoben Material, beispielsweise Polyaryletherketon gespritzt, um sie bruchunempfindlich zu machen und um das Eindringen von schmutzeintragender Probe zu erschweren. An der Blasenaustrittsöffnung 16 geht die Wandung 13a der Messkapillare 13 gegen Null, um ein Blasenspringen von der Innenkante auf die Außenkante einer an sich üblichen Stirnfläche einer insgesamt hydrophoben Messkapillare auszuschließen, was zu nicht reproduzierbaren Ergebnissen bei der Auswertung des maximalen Blasendrucks führen würde. Um weiterhin zu verhindern, dass eine Blase nach dem Überschreiten des Blasendruckmaximums und vor dem Erreichen des Blasendruckminimums an der Messkapillare 13 in Richtung Probenoberfläche an der Außenwand der Messkapillare 13 hoch kriecht, was zu einem instabilen Druckminimum führt ist um die Öffnung der Messkapillare 13 ein Stützring 13b angeordnet, über den die Blase abkippt und sich ablöst. Äquivalent kann die Stirnfläche einer herkömmlichen hydrophoben Messkapillare eingekerbt sein, wodurch sich ebenfalls ein Stützring ausbildet. Durch Anschrägen der Messkapillare 13 oder schräges Eintauchen in das Messgefäß 3 kann außerdem die Richtung des Blasenabgangs vorbestimmt werden, um stabile Messwerte zu erhalten. Des weiteren verringert eine Drossel 13c zusätzlich zum hydrophoben Material das Risiko, dass Flüssigkeit in die Messkapillare 13 schlägt und Schwingungen, die durch plötzliche Änderungen des Blasendruckes verursacht werden, in das Innere der Messkapillare 13 übertragen werden und bei der Messung als falsche Extremwerte des Druckes erfasst werden. Die Messkapillare 13 ist mit einem Schnellverschluss 13d zur leichten Auswechselbarkeit ausgerüstet.

Entsprechend Fig. 1 sind im oberen Teil des Gehäuses 1a die elektronischen Komponenten für die Messung, Auswertung und Steuerung in einem eigenen feuchtigkeitsdichten Gehäuse 17 angeordnet, welches weiterhin ein Display 18 zur Anzeige von Systemzuständen und Messwerten, eine Tastatur 19 und Einführungen 20 für elektrische Leitungen 21 für Betriebsstrom, Schnittstellen sowie für geräteeigene Ventile 10 und/oder Pumpen enthält.

Die Komponenten für eine Prozessbeeinflussung sind nicht in der Vorrichtung integriert, sondern Bestandteil der jeweiligen industriellen Reinigungs- Beschichtungs- oder Spülanlage.

In Fig. 6 ist dargestellt, dass die Vorrichtung sehr einfach an ein Bad 2 anzuschließen ist, indem die Fluidleitungen 8, 9, 12 in üblicher Art mit Schlauchverbindern und die Stromversorgungs- und Schnittstellenleitungen 21 zu der externen Prozessleiteinrichtung 22, beispielsweise einer SPS, und zu einer oder mehreren externen Einrichtungen 23, beispielsweise einer Dosierpumpe, für die Prozessbeeinflussung mit Klemmen verbunden werden. Es bestehen im Beispiel sowohl Verbindungen zwischen dem externen Prozessleitsystem 22 und der oder den externen Prozessbeeinflussungseinrichtungen 23 als auch zwischen der Vorrichtung und der oder den externen Prozessbeeinflussungseinrichtungen 23. Im vorliegenden Beispiel dosiert programmgesteuert eine Dosierpumpe 23 aus einem Vorratsbehälter 24 Reiniger nach.

Die Schnittstellen dienen der Kommunikation mit dem externen Prozessleitsystem 22 und optional der direkten Ansteuerung von externen Badbeeinflussungseinrichtungen 23. Somit kann eine Prozessbeeinflussung über das Prozessleitsystem 22 oder bedarfsweise auch direkt von der Vorrichtung vorgenommen werden. Weitere in Fig. 6 nicht dargestellte elektrische Schnittstellen dienen zur Signalisierung von Prozessabläufen, Zuständen von Prozesslösung und/oder Zuständen der Vorrichtung.

Die Messschaltungen für die Oberflächenspannungsmessung 25 und die Temperaturmessung 26 sind modulartig ausgeführt und lassen sich durch Messschaltungen für weitere Messgrößen ergänzen, wofür Vorbereitungen 27 für die Messschaltung(en) sowie mechanische Vorbereitungen 28 für den entsprechenden Sensor(en) vorgesehen sind. Die zusätzlichen Sensoren können auch in die Fluidleitungen oder in das Messgefäß integriert werden. Da die Oberflächenspannung temperaturabhängig ist, ist der Temperatursensor 29 kapillarnah angeordnet.

Die dynamische Oberflächenspannung einer Prozesslösung wird nach dem Differenzdruckverfahren an einer Messkapillare 13 gemessen, wobei die Differenz zwischen dem maximalen und dem minimalen Blasendruck einer Blase bei unterschiedlichen, einstellbaren Oberflächenaltern erfasst und ausgewertet wird.

Damit wird die Messung unabhängig von der Eintauchtiefe und der Messkapillare 13 und der Dichte der zu messenden Flüssigkeit.

Da bei Tensidlösungen der Oberflächenspannungswert von dem Alter der Oberfläche, der Blasenlebensdauer t_{life} abhängt, erhält der Oberflächenspannungssensor von der Steuerung den Sollwert der Blasenlebensdauer vorgegeben. Durch geeignete Auswahl der Blasenlebensdauer wird eine optimale Steilheit der Oberflächenspannungs-Konzentrationskennlinie erreicht. Soll nun die Konzentration einer Probe ermittelt werden, wird beispielsweise die Oberflächenspannung (oder eine andere korrelierende Größe wie der Differenzdruck) gemessen, vom Sensor an den Controller übergeben und vom Controller unter Verwendung einer Kennlinie nach Figur 4 aus dem Speicher die Konzentration bestimmt. Sind Oberflächenalter und Temperatur konstant, genügt pro Reiniger eine solche Kennlinie, ansonsten liegen diese in Scharen im Speicher bzw. es erfolgt eine Korrektur der Messwerte (Temperaturkompensation, Blasenlebensdauerkompensation). Es ist auch möglich, die Probe temperiert zuzuführen oder im Gefäß zu temperieren, um die Probe auf eine für die Messung geeignete Temperatur zu bringen. Auch ist die Regelung des Bades nach der Oberflächenspannung möglich, ohne vorher die Konzentration zu bestimmen.

Eine geregelte Quelle versorgt die Messkapillare 13 mit dem erforderlichen Gasvolumenstrom, um das vorgegebene Oberflächenalter einzustellen. Dieses Gas ist zweckmäßigerweise Luft, die durch das System aus der Umgebung angesaugt wird. Nötigenfalls kann diese vorher getrocknet werden, um Kondensatbildung in der in eine kalte Flüssigkeit getauchten Messkapillare 13 zu vermeiden, was das Übertragungsverhalten verändern würde.

Da bei dem Blasendruckverfahren üblicherweise die Blasenoberfläche kontinuierlich aufgebaut wird, ist das sich einstellende Adsorptionsgleichgewicht gestört, was dazu führt, dass nur relativ hohe Tensidkonzentrationen unterschieden werden können. Um auch in gering konzentrierten Lösungen eine Tensidwirkung zu erfassen, ist es möglich, eine Blase in sehr kurzer Zeit aufzubauen und dann bei einer konstanten Oberfläche den Blasendruck als Maß für die Oberflächenspannung zu messen.

Um die Zuverlässigkeit insbesondere der Oberflächenspannungsmessung und abgeleiteter Messgrößen zu erhöhen, ist es möglich, mehrere Sensoren redundant zu betreiben und deren Messwerte zu vergleichen. Eine weitere Maßnahme hierzu ist, an der Messkapillare 13 anhaftende Verschmutzungen mit einem Ultraschallgeber zu beseitigen, der im Messgefäß 3 nahe der Messkapillare 13 optional installiert ist.

Figur 5 verdeutlicht im Zusammenhang mit Fig. 1 und Fig. 6 den Betriebsablauf der Vorrichtung. Nach dem Einschalten beginnt das Gerät mit dem Durchleiten von Wasser durch das Messgefäß 3. Dieser Modus wird als "Reinigung" bezeichnet. Damit werden Verunreinigungen, insbesondere tensidischer Art, ausgespült, was durch den Oberflächenspannungssensor, bestehend aus der Messkapillare 13 und der Messschaltung 25, überwacht wird. Ist keine Änderung des Oberflächenspannungswertes mehr zu erfassen, wird im Kalibriermodus der Oberflächenspannungssensor 13, 25 in diesem Wasser, dessen Oberflächenspannung nur von der Temperatur abhängt, unter Verwendung der mit dem Temperatursensor 29 gemessenen Temperatur kalibriert. Der Zeitpunkt für eine Kalibrierung wird durch den Controller ermittelt oder vorgegeben. An Stelle des Zulaufventils 10 für das Wasser wird folgend das Ventil 10 für den Probenzulauf eingeschaltet. Steht die Probe nicht unter Druck an, kann technisch äquivalent auch eine Pumpe eingeschaltet werden.

Unterschreiten die Änderungen der Temperatur und der Oberflächenspannung der durchfließenden auf Qualität nachzuregelnden Prozesslösung vorgebbare Werte, werden gültige Messwerte durch die integrierten Sensoren 13, 25, 26, 29 erfasst und verarbeitet (Messmodus), die Messwerte und/oder abgeleiteten Signale an Anzeigen (Display 18) und/oder Schnittstellen ausgegeben. Die Ablaufsteuerung der Modi, die Verarbeitung der Messwerte und die Kommunikation mit dem externen Prozessleitsystem 22 und gegebenenfalls eine Ansteuerung von externen Prozessbeeinflussungseinrichtungen 23 werden vom Controller vorgegeben, wozu eine modifizierbare Software enthalten ist.

Die Vorrichtung enthält einen internen Speicher zur Ablage der Firmware, von Einstellwerten der Vorrichtung, Messwerten und die Umstände deren Gewinnung, wie Kalibrierwerte, chronologische Daten sowie Daten zur Funktion und Selbstüberwachung. Zur Selbstüberwachung können zum Beispiel weitere Parameter des Drucksignals wie die tatsächliche Blasenlebensdauer des Blasenaufbaus, der Verlauf des Druckaufbaus in der Blase (Hinweis auf Verschmutzung der Kapillare), der absolute Druckanteil des Differenzdrucksignals (Hinweis auf notwendigen Austausch der Messkapillare 13 wegen Zusetzen) usw. verwendet werden. Im Fehlerfall erfolgt die Ausgabe der Fehler über das Display 18, Schnittstellen oder Warnlampen.

### Bezugszeichenliste

- 1: funktionelle und bauliche Einheit der Vorrichtung
- 1a: Gehäuse
- 1b: Gehäusetür, (ab)schließbar
- 1c: Montageplatte im Gehäuse
- 2: Reinigungsbad
- 3: Messgefäß
- 4: Dämpfungsmaterial der Montageplatte
- 4a: Dämpfungsmaterial des Gehäuses
- 5: Zulauf
- 6: Ablauf
- 7: Verteiler
- 8: Zulaufanschluss für Frischwasser aus dem Leitungsnetz
- 9: Zulaufanschluss für Probe(n)
- 10: Ventil
- 11: Druckregler
- 12: Ablaufschlauch aus Messgefäß
- 13: Messkapillare
- 13a: Wandung der Messkapillare an der Blasenaustrittsstelle
- 13b: Stützring
- 13c: Drossel
- 13d: Schnellverschluss
- 14: Prallplatte
- 15: Überlauf
- 16: Blasenaustrittsöffnung
- 17: feuchtigkeitsdichtes Elektronikgehäuse
- 18: Display
- 19: Tastatur
- 20: Feuchtigkeitsdichte Kabeleinführung
- 21: Anschlussleitungen für Betriebsstrom, Schnittstellen sowie geräteeigene Ventile und/oder Pumpen
- 22: Prozessleitsystem einer Reinigungsanlage (SPS)
- 23: Einrichtung(en) zur Prozessbeeinflussung (z.B. Dosierpumpe zum Dosieren des Reinigers in das Reinigungsbad) einer Reinigungsanlage
- 24: Reiniger(konzentrat)vorrat
- 25: Messmodul Oberflächenspannung, einschließlich einer geregelten Quelle für den Gasvolumenstrom
- 26: Messmodul für die Temperaturmessung
- 27: Vorbereitung für weitere Messmodul(e)
- 28: freie Bohrung(en) für weitere(n) Sensor(en)
- 29: Temperatursensor

## Patentansprüche

1. Vorrichtung zum Überwachen und Regeln von Prozesslösung oder der Konzentration von Zusätzen in Prozesslösung, insbesondere Tensiden, auf der Grundlage einer Oberflächenspannungsmessung nach der Blasendruckmethode,
**dadurch gekennzeichnet,**
**dass** die Vorrichtung zum fortlaufenden Überwachen und Regeln von kontinuierlich arbeitenden, industriellen Reinigungs-, Beschichtungs- und Spülanlagen Einrichtungen für eine automatische Erfassung der Oberflächenspannung von Prozesslösung oder der Konzentration von Prozess-Zusatz in Prozesslösung, für eine automatische Verarbeitung und Steuerung eines vorgegebenen internen Programmablaufs der Vorrichtung, für eine automatische und fortlaufende Überwachung und Regelung der Qualität von Prozesslösung sowie zur automatischen Ansteuerung einer externen Prozessbeeinflussungseinrichtung (23) und automatischen Kommunikation mit einem externen Prozessleitsystem (22) umfasst, die sowohl funktionell als auch baulich zu einer autarken Einheit (1) in einem Gehäuse (1a) zusammengefasst sind, wobei die Einrichtung zur Erfassung der Oberflächenspannung oder der Konzentration von Prozess-Zusatz mindestens umfasst:
- ein Messgefäß (3) mit einer programmgesteuerten Zu- und Ablauf-Versorgungseinrichtung (7, 10, 11) für einen programmgerechten Austausch von Spülflüssigkeit, Kalibrierflüssigkeit und Probe(n) im Messgefäß (3),
- eine Messkapillare (13) in dem Messgefäß (3),
- eine programmgesteuerte Versorgungseinrichtung für eine Versorgung der Messkapillare (13) mit Messgas,
- einen Drucksensor zur Erfassung von Parametern des Blasendruckes der an der Messkapillare (13) austretenden Gasblasen in Kalibrierflüssigkeit und Probe(n),
- Anschlüsse/Schnittstellen (21) für elektrischen Betriebsstrom, für Signalisierung von Zuständen der Vorrichtung, von Prozessabläufen und/oder von Prozesslösung, für das externe Prozessleitsystem (22), sowie für Schläuche/Rohre (8, 9, 12) für Fluide,
und wobei sämtliche Einrichtungen durch ein intelligentes Rechensystem koordiniert sind, welches selbständig Prozessdaten gewinnt, verarbeitet, zur Modifikation seines Programmablaufes nutzt, mit einem externen Prozessleitsystem (22) austauscht und/oder Prozessbeeinflussung vornimmt, wobei das Rechensystem in einem Speicher folgende Speicherinhalte enthält, die durch das Prozessleitsystem (22), manuell und/oder durch die Vorrichtung selbst vorgebbar sind:
- Ablaufsequenzen für die Reinigung, Kalibrierung und Messung bei verschiedenen Blasenlebensdauern,
- Algorithmen zur Messwertgewinnung und -verarbeitung,
- Kalibrierkurven und Reiniger-spezifische Konzentrationsreihen und
- eigene Messwerte einschließlich der Umstände ihrer Gewinnung.

2. Vorrichtung nach Anspruch 1,
**dadurch gekennzeichnet,**
**dass** das Messgefäß (3) im Reinigungsmodus, Kalibriermodus und Messmodus programmgerecht nacheinander von Reinigungsflüssigkeit, Kalibrierflüssigkeit und Probe(n) jeweils durchströmt ist.

3. Vorrichtung nach Anspruch 1,
**dadurch gekennzeichnet,**
**dass** das Messgefäß (3) im Bereich der Messkapillare (13) strömungsminimiert gestaltet ist.

4. Vorrichtung nach Anspruch 1,
**dadurch gekennzeichnet,**
**dass** das Messgefäß (3) im Messmodus der Vorrichtung abgezweigte Probe einer Prozesslösung oder alternierend abgezweigte Proben mehrerer Prozesslösungen aufnimmt.

5. Vorrichtung nach Anspruch 1,
**dadurch gekennzeichnet,**
**dass** programmgesteuert Probe und/oder Reinigungs- und/oder Kalibrierflüssigkeit unter Schweredruck oder Förderdruck oder Leitungsdruck in das Messgefäß (3) einlaufen und die Medien durch Schweredruck oder Förderdruck aus dem Messgefäß (3) ablaufen.

6. Vorrichtung nach Anspruch 1,
**dadurch gekennzeichnet,**
**dass** die Einrichtung zur Erfassung der Oberflächenspannung schwingungsentkoppelt gelagert ist.

7. Vorrichtung nach Anspruch 1,
**dadurch gekennzeichnet,**
**dass** die Messkapillare (13) mittels eines Schnellverschlusses (13d) leicht auswechselbar befestigt ist.

8. Vorrichtung nach Anspruch 1,
**dadurch gekennzeichnet,**
**dass** die Messkapillare (13) hydrophob ist, am Blasenaustritt schräg zur Probenoberfläche ist und einen Stützring (13b) für abkippende Blasen aufweist.

9. Vorrichtung nach Anspruch 1,
**dadurch gekennzeichnet,**
**dass** ein Ultraschallgeber zur Beaufschlagung der Messkapillare (13) mit Ultraschall im Reinigungsmodus im Messgefäß (3) angeordnet ist.

10. Vorrichtung nach Anspruch 1,
**dadurch gekennzeichnet,**
**dass** ein Temperatursensor (29) kapillarnah angeordnet ist.

11. Vorrichtung nach Anspruch 1,
**dadurch gekennzeichnet,**
**dass** zusätzliche Sensoren zur Erfassung weiterer Messgrößen, wie Leitfähigkeit, Trübung und pH-Wert innerhalb der Vorrichtung integriert sind und von dieser verarbeitet werden.

12. Vorrichtung nach Anspruch 1,
**dadurch gekennzeichnet,**
**dass** in dem Gehäuse (1a) ein Anzeige- und Bedienfeld (18, 19) zur Anzeige und Abfrage von Messwerten und Systemzuständen angeordnet ist.

13. Vorrichtung nach Anspruch 1,
**dadurch gekennzeichnet,**
**dass** eine oder mehrere Schnittstellen (21) für den direkten Anschluss einer oder mehrerer externer Prozessbeeinflussungseinrichtungen (23) vorhanden ist/sind.

14. Verfahren zum fortlaufenden Überwachen und Regeln von Prozesslösungen oder der Konzentration von Zusätzen in Prozesslösungen, insbesondere Tensiden, in kontinuierlich arbeitenden industriellen Reinigungs-, Beschichtungs- und Spülanlagen, auf der Grundlage einer Oberflächenspannungsmessung nach der Blasendruckmethode mit einer Vorrichtung nach Anspruch 1,
**dadurch gekennzeichnet,**
**dass** automatisch die dynamische Oberflächenspannung einer Prozesslösung nach einem Differenzdruckverfahren an einer Messkapillare (13) gemessen wird, indem die Differenz zwischen dem maximalen und dem minimalen Blasendruck einer Blase bei unterschiedlichen, einstellbaren Oberflächenaltern erfasst und ausgewertet wird.

15. Verfahren nach Anspruch 14,
**dadurch gekennzeichnet,**
**dass** automatisch eine Prozesslösung nach einem Verfahren gemessen wird, bei dem die Blasenoberfläche einer Blase konstant gehalten wird.

16. Verfahren nach Anspruch 14,
**dadurch gekennzeichnet,**
**dass** mehrere gleichartige Sensoren für wenigstens eine Messgröße redundante Messwerte liefern.

17. Verfahren nach Anspruch 14,
**dadurch gekennzeichnet,**
**dass** stehende oder fließende Probe(n) vor der Messung temperiert wird.

18. Verfahren nach Anspruch 14,
**dadurch gekennzeichnet,**
**dass** mit einer einzigen Vorrichtung alternierend mehrere Prozesslösungen überwacht und beeinflusst werden.

## Claims

1. Device for monitoring and regulating process solution or the concentration of additives in process solution, in particular surfactants, based on a surface tension measurement by the bubble pressure method, **characterised in that** the device for continuous monitoring and regulation of continuously operating, industrial cleaning, coating and rinsing systems comprises apparatuses for automatic detection of the surface tension of process solution or the concentration of process additive in process solution, for automatic processing and control of a predetermined internal programme sequence of the device, for automatic and continuous monitoring and regulation of the quality of process solution and for the automatic triggering of an external process influencing apparatus (23) and automatic communication with an external process control system (22), which are combined both functionally and constructionally to form an autarkic unit (1) in a housing (1a), wherein the apparatus for detecting the surface tension or the concentration of process additive at least comprises:
- a measurement vessel (3) with a programme-controlled inflow and outflow supply apparatus (7, 10, 11) for a programme-appropriate exchange of rinsing liquid, calibration liquid and sample(s) in the measurement vessel (3),
- a measurement capillary (13) in the measurement vessel (3),
- a programme-controlled supply apparatus for supplying the measurement capillary (13) with measuring gas,
- a pressure sensor for detecting parameters of the bubble pressure of the gas bubbles that exit at the measurement capillary (13) in the calibration liquid and sample(s),
- connections/interfaces (21) for electric operating current, for signalling states of the device, of process sequences and/or process solution, for the external process control system (22) as well as for hoses/pipes (8, 9, 12) for fluids,
and wherein all the apparatuses are coordinated by an intelligent computer system, which independently extracts process data, processes it, uses it for modification of its programme sequence, exchanges it with an external process control system (22) and/or carries out process influencing, wherein the computer system contains in a memory the following memory contents, which can be input by the process control system (22), manually and/or by the device itself:
- sequences for cleaning, calibration and measurement in the case of various bubble life durations,
- algorithms for extracting and processing measurement values,
- calibration curves and cleaner-specific concentration series and
- inherent measurement values including the circumstances of extracting them.

2. Device according to claim 1, **characterised in that** the measurement vessel (3) has cleaning liquid, calibration liquid and sample(s) flowing through it, one after the other respectively, in the cleaning mode, the calibration mode and the measurement mode, in a manner appropriate to the programme.

3. Device according to claim 1, **characterised in that** the measurement vessel (3) is formed in a flow-minimised manner in the region of the measurement capillary (13).

4. Device according to claim 1, **characterised in that** the measurement vessel (3) in the measurement mode of the device receives a diverted sample of a process solution or, in an alternating manner, diverted samples of a plurality of process solutions.

5. Device according to claim 1, **characterised in that**, under programme control, sample and/or cleaning and/or calibration liquid run into the measurement vessel (3) under gravitational pressure or transport pressure or line pressure and the media flow out of the measurement vessel (3) by means of gravitational pressure or transport pressure.

6. Device according to claim 1, **characterised in that** the apparatus for detecting surface tension is mounted so as to be uncoupled from vibrations.

7. Device according to claim 1, **characterised in that** the measurement capillary (13) is fastened so as to be easy to exchange by means of a rapid closure mechanism (13d).

8. Device according to claim 1, **characterised in that** the measurement capillary (13) is hydrophobic, is slanted relative to the sample surface at the bubble exit, and has a support ring (13b) for bubbles that tip off.

9. Device according to claim 1, **characterised in that** an ultrasound emitter is arranged in the measurement vessel (3) for impacting the measurement capillary (13) with ultrasound, in the cleaning mode.

10. Device according to claim 1, **characterised in that** the temperature sensor (29) is arranged close to the capillary.

11. Device according to claim 1, **characterised in that** additional sensors for detecting further measurement values, such as conductivity, turbidity and pH are integrated within the device and processed by the latter.

12. Device according to claim 1, **characterised in that** a display and operating panel (18, 19) is arranged in the housing (1a) for displaying and calling up measurement values and system states.

13. Device according to claim 1, **characterised in that** one or more interfaces (21) for directly connecting one or more external process influencing apparatuses (23) is/are provided.

14. Method for continuously monitoring and regulating process solutions or the concentration of additives in process solutions, in particular surfactants, in continuously operating industrial cleaning, coating and rinsing systems, based on a surface tension measurement by the bubble pressure method with a device according to claim 1, **characterised in that** the dynamic surface tension of a process solution is measured automatically by a differential pressure method at a measurement capillary (13), **in that** the difference between the maximum and the minimum bubble pressure of a bubble is detected and evaluated at different surface ages that can be set.

15. Method according to claim 14, **characterised in that** a process solution is automatically measured by a method, in which the bubble surface of a bubble is kept constant.

16. Method according to claim 14, **characterised in that** a plurality of similar sensors provide redundant measurement values for at least one measurement variable.

17. Method according to claim 14, **characterised in that** standing or flowing sample(s) is/are temperature-controlled prior to measurement.

18. Method according to claim 14, **characterised in that** a plurality of process solutions are alternately monitored and influenced, in an alternating manner, by a single device.

## Revendications

1. Dispositif de surveillance et de régulation d'une solution de processus ou de la concentration d'additifs dans la solution de processus, notamment des agents tensioactifs, sur la base d'une mesure de la tension superficielle selon la méthode de pression de bulles,
**caractérisé en ce que**
le dispositif de surveillance et de régulation permanentes d'installations industrielles de nettoyage, de revêtement et de rinçage à fonctionnement continu comprend des équipements pour une détection automatique de la tension superficielle d'une solution de processus ou de la concentration d'un additif de processus dans une solution de processus, un traitement et une commande automatiques d'une séquence de programme interne prédéterminée du dispositif, une surveillance et une régulation permanentes et automatiques de la qualité d'une solution de processus ainsi qu'un dispositif d'influence de processus extérieur (23) et une communication automatique avec un système de conduite de processus extérieur (22), qui sont regroupés aussi bien au niveau du fonctionnement qu'au niveau de la construction en une unité autonome (1) à l'intérieur d'un boîtier (1a), l'équipement de détection de la tension superficielle ou de la concentration d'un additif de processus comprenant au moins :
- un récipient de mesure (3) avec un dispositif d'alimentation et d'évacuation (7, 10, 11) commandé par programme pour un échange programmé de liquide de rinçage, de liquide de calibrage et d'échantillon(s) dans le récipient de mesure (3),
- un capillaire de mesure (13) dans le récipient de mesure (3),
- un dispositif d'alimentation commandé par programme pour une alimentation du capillaire de mesure (13) en gaz de mesure,
- un capteur de pression pour détecter des paramètres de la pression des bulles de gaz sortant au niveau du capillaire de mesure (13) dans le liquide de calibrage et le ou les échantillons,
- des raccords/interfaces (21) pour le courant électrique de fonctionnement, la signalisation d'états du dispositif, des séquences de processus et/ou de la solution de processus pour le système de conduite de processus externe (22) ainsi que pour des flexibles/tuyaux (8, 9, 12) pour des fluides, et
tous les équipements sont coordonnés par un système de calcul intelligent qui de façon indépendante obtient, traite et utilise des données de processus pour modifier sa séquence de programme, les échange avec un système de conduite de processus externe (22) et/ou réalise une influence de processus, le système de calcul contenant dans une mémoire les contenus de mémoire suivants définis par le système de conduite de processus (22), manuellement et/ou par le dispositif lui-même :
- séquences pour le nettoyage, le calibrage et la mesure pour des durées de vie de bulles différentes,
- algorithmes pour obtenir et traiter des valeurs de mesure,
- courbes de calibrage et séries de concentrations spécifiques du produit nettoyant,
- valeurs de mesure propres y compris les circonstances de leur obtention.

2. Dispositif selon la revendication 1,
**caractérisé en ce qu'**
en mode de nettoyage, mode de calibrage et mode de mesure, le récipient de mesure (3) est traversé de façon programmée successivement et à chaque fois pas un liquide de nettoyage, un liquide de calibrage et un ou plusieurs échantillons.

3. Dispositif selon la revendication 1,
**caractérisé en ce que**
dans la zone du capillaire de mesure (13) le récipient de mesure (3) a une forme minimisant l'écoulement.

4. Dispositif selon la revendication 1,
**caractérisé en ce que**
le récipient de mesure (3) reçoit un échantillon d'une solution de processus dérivé en mode de mesure du dispositif ou des échantillons de plusieurs solutions de processus dérivés en alternance.

5. Dispositif selon la revendication 1,
**caractérisé en ce qu'**
un échantillon et/ou un liquide de nettoyage et/ou de calibrage entre de façon commandée sous pression de pesanteur, de refoulement ou de conduite dans le récipient de mesure (3), et les fluides sortent du récipient de mesure (3) par pression de pesanteur ou de refoulement.

6. Dispositif selon la revendication 1,
**caractérisé en ce que**
l'équipement de détection de la tension superficielle est logé de façon découplée d'oscillations.

7. Dispositif selon la revendication 1,
**caractérisé en ce que**
pour un remplacement facile le capillaire de mesure (13) est fixé au moyen d'une fermeture rapide (13d).

8. Dispositif selon la revendication 1,
**caractérisé en ce que**
le capillaire de mesure (13) est hydrophobe, incliné par rapport à la surface de l'échantillon au niveau de la sortie des bulles et présente une bague d'appui (13b) pour des bulles basculantes.

9. Dispositif selon la revendication 1,
**caractérisé en ce qu'**
un générateur d'ultrasons est disposé dans le récipient de mesure (3) pour solliciter le capillaire de mesure (13) par ultrasons en mode de nettoyage.

10. Dispositif selon la revendication 1,
**caractérisé en ce qu'**
un capteur de température (29) est disposé à proximité du capillaire.

11. Dispositif selon la revendication 1,
**caractérisé en ce que**
des capteurs supplémentaires pour détecter d'autres grandeurs de mesure telles que la conductibilité, le trouble et la valeur du pH sont intégrés dans le dispositif et traités par celui-ci.

12. Dispositif selon la revendication 1,
**caractérisé en ce que**
le boîtier (1a) contient un champ d'indication et de maniement (18, 19) pour indiquer et consulter des valeurs de mesure et des états de système.

13. Dispositif selon la revendication 1,
**caractérisé en ce qu'**
une ou plusieurs interfaces (21) sont disponibles pour la connexion directe d'un ou de plusieurs dispositifs d'influence de processus externes (23).

14. Procédé de surveillance et de régulation permanentes de solutions de processus ou de la concentration d'additifs dans des solutions de processus, notamment des agents tensioactifs, dans des installations industrielles de nettoyage, de revêtement et de rinçage à fonctionnement continu, sur la base d'une mesure de la tension superficielle selon la méthode de pression de bulles avec un dispositif selon la revendication 1,
**caractérisé en ce que**
la tension superficielle dynamique d'une solution de processus est mesurée automatiquement selon un procédé de pression différentielle sur un capillaire de mesure (13) en détectant et en exploitant la différence entre les pressions maximale et minimale d'une bulle pour des âges de surface différents, réglables.

15. Procédé selon la revendication 14,
**caractérisé en ce qu'**
une solution de processus est mesurée automatiquement selon un procédé dans lequel la surface d'une bulle est maintenue constante.

16. Procédé selon la revendication 14,
**caractérisé en ce que**
plusieurs capteurs du même type fournissent des valeurs de mesure redondantes pour au moins une grandeur de mesure.

17. Procédé selon la revendication 14,
**caractérisé en ce qu'**
un ou plusieurs échantillons immobiles ou coulants sont tempérés avant la mesure.

18. Procédé selon la revendication 14,
**caractérisé en ce que**
plusieurs solutions de processus sont surveillées et influencées en alternance au moyen d'un seul dispositif.
